# EUROPEAN PATENT APPLICATION

(11) **EP 1 734 724 A1**
(43) Date of publication of application: **20.12.2006**
(21) Application number: 04726706.7
(22) Date of filing: 09.04.2004
(51) Int. Cl.: H04L 29/10

(54) **A ASN.1 PROTOCOL PROCESSOR**

(71) Applicant: Huawei Technologies Co., Ltd., Longgang District, Shenzhen, Guangdong 518129 (CN)
(72) Inventor: CHEN, Yu, Shenzhen, Guangdong 518129 (CN); DUAN, Jinzhu, Shenzhen, Guangdong 518129 (CN); CHEN, Kefeng, Shenzhen, Guangdong 518129 (CN); ZHOU, Xinyu, Shenzhen, Guangdong 518129 (CN); TIAN, Guotao, Shenzhen, Guangdong 518129 (CN); HUANG, Zheng, Shenzhen, Guangdong 518129 (CN)
(74) Representative: Manitz, Gerhart
(86) International application number: PCT/CN2004/000333
(87) International publication number: WO 2005/099229

(57) **Abstract**

The present invention discloses an ASN.1 protocol processor for protocol interacting between the server and client and transformation between protocol data and byte stream data, including: a protocol data description module in which ASN.1 protocol is integrated and a protocol procedure module in which protocol procedure codes are integrated; wherein the protocol data description module stores ASN.1 protocol description information which is described by the extensible Markup Language (XML) and ASN.1 protocol data which are required by the protocol procedure and set according to the description information; and the protocol procedure module performs protocol interaction and protocol transformation based on the protocol procedure according to the information in the protocol data description module. An ASN.1 protocol processing method is also disclosed. With the the present invention, it is possible to greatly reduce the difficulty and working load of application software development as well as the working load of system maintenance.

## Description

### Field of the Technology

The present invention relates to a processing technique for Abstract Syntax Notation One (ASN.1) protocol, and particularly, to an ASN.1 protocol processor.

### Background of the Invention

ASN.1 is an abstract syntax notation specification for defining data interaction between heterogeneous systems, such as a Window system and a UNIX system. ASN.1 is popularly used in the telecommunication field, mainly for communications between the client and the server in a client/server architecture. The ASN.1 protocol communication procedure includes the following steps:
1. establishing the connection between the client and the server;
2. performing protocol interacting and protocol encoding/decoding;
3. disconnecting the client and the server.

Usually, the whole procedure above is implemented by a software module, i.e. an ASN.1 protocol processor. In Step 2, the protocol interacting process includes data sending and receiving while the data should be encoded before being sent and the byte stream from the server should be decoded after being received, which is relatively complex.

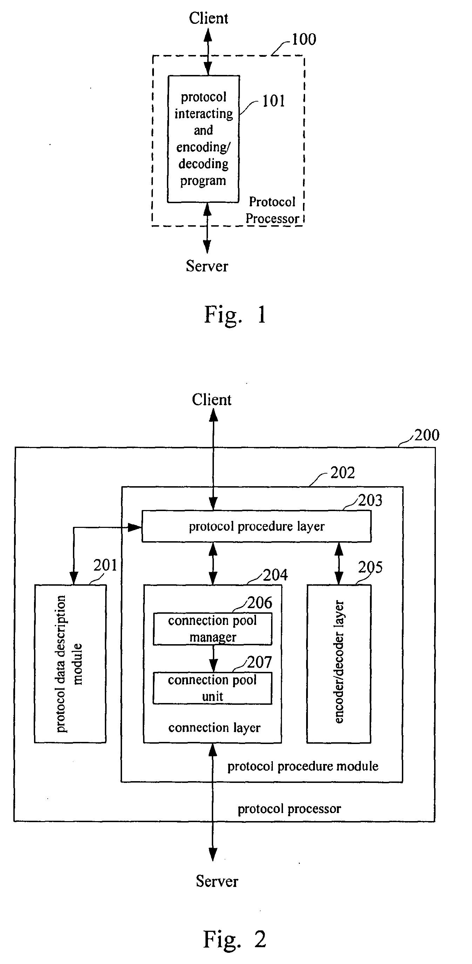

At present, in the development of most network management/application systems where the ANS.1 protocol is used as the communication protocol, the processing method of an ASN.1 processor is: protocol interacting by means of Java as well as encoding/decoding is conducted for every ASN.1 notation while data transformation is made between ASN.1 protocol data and byte stream data to achieve the encoding and decoding for ASN.1 data at the application level. The Java language is an inter-platform programming language, which makes program codes portable across platforms. Figure 1 is a schematic diagram illustrating an ANS.1 processor in the prior art.

As shown in Figure 1, the ASN.1 processor 100 in the prior art comprises only a protocol interacting and encoding/decoding program 101 that performs the whole procedure including protocol interacting and encoding/decoding. First, the ASN.1 protocol processor 100 establishes a connection between the client and the server; and then the application system in the client submits an ASN.1 request to the ASN.1 protocol processor; the protocol interacting and encoding/decoding program 101 encodes the ASN.1 notation to byte stream data that can be accepted by the server, and sends the byte stream data to the application system in the server; the application system in the server returns an ASN.1 response to the ASN.1 protocol processor 100 after it receives the ASN.1 request; the protocol interacting and encoding/decoding program 101 decodes the ASN.1 response to ASN.1 protocol data and sends decoded ASN.1 response to the application system in the client; the application system in the client receives the decoded ASN.1 response to accomplish protocol interacting; finally, the ASN.1 protocol processor cuts off this connection between the client and the server.

In the procedure mentioned above, protocol interacting and encoding/decoding are performed in the application using Java language for every ASN.1 notation to accomplish encoding and decoding at the application level. In some cases, the source codes of a Java program in a large or medium size software system can be over ten thousand lines, leading to a huge working load of development and maintenance and demanding a high level of knowledge and skills of the application developer. Furthermore, when all functions are performed by one program, high accuracy of the program is necessary while a minor defect would make the debugging of the program difficult, which again increases the working load of debugging and maintenance.

The extensible Markup Language (XML) rising up recently is designed to be a standard text format for describing structured information on Web, and data of different formats can be converted to the XML data. Therefore, data on heterogeneous platforms are portable through the XML.

Up till now, the XML technology has not been used in the processing of the ASN.1 communication protocol.

### Summary of the Invention

An ASN.1 protocol processor is provided in the invention to reduce the difficulty and working load in the development of the network management protocol processing.

The technical scheme of the present invention is as follows:
An ASN.1 protocol processor for protocol interacting between the server and client and transformation between protocol data and byte stream data, comprising a protocol data description module in which the ASN.1 protocol is integrated and a protocol procedure module in which the codes for protocol processing are integrated;
wherein the protocol data description module stores ASN.1 protocol description information which is described by XML and the ASN.1 protocol data which are required for protocol processing and are set according to the description information before protocol interacting;
the protocol procedure module takes out the corresponding ASN.1 protocol description information from the protocol data description module according to an ASN.1 request from the client, encodes the ASN.1 request from the client into the byte stream data that can be accepted by the server based on the description information and sends them to the server; or decodes the byte stream data received from the server into the ASN.1 protocol data and returns them to the client.

The protocol procedure module further includes: a protocol procedure layer in which the protocol interacting process is integrated, an encoder/decoder layer in which the encoding and decoding processes are integrated, and a connection layer;
the protocol procedure layer receives the ASN.1 request initiated by the client, and then takes out the corresponding ASN.1 protocol description information from the protocol data description module and sends it to the encoder/decoder layer; the encoder/decoder layer encodes the ASN.1 request from the client into the byte stream data that can be accepted by the server based on the description information, and returns the byte stream data to the protocol procedure layer; and then the procedure layer sends the byte stream data to the server through the connection layer;
alternatively, the protocol procedure layer receives the byte stream data from the connection layer and sends them to the encoder/decoder layer; the encoder/decoder layer decodes the byte stream data into ASN.1 protocol data and returns them to the protocol procedure layer; and then the protocol procedure layer returns the ASN.1 protocol data to the client;
the connection layer is controlled by the protocol procedure layer to establish connection between the client and the server, and maintain the connection after one protocol interaction is performed so that the same connection can be used for next interactions.

Furthermore, the protocol procedure layer may include: a simple query procedure unit in which a data query procedure is integrated, and a data subscription procedure unit in which a data subscription procedure is integrated; and the protocol data description module further includes: information of the server and the description information for determining which of the above procedure units is to be entered;
the simple query procedure unit is used to control the client to send one query request to the server and to receive once the inquired data returned from the server when the client inquires the data in the server;
the data subscription procedure unit is used to control the client to send one subscription request to the server and to receive for a plurality of times all the subscribed data returned from the server when the client subscribes to the data in the server.

The connection layer further includes a connection pool unit and a connection pool manager; the connection pool manager controls the connection pool unit to establish connection between the client and the server.

The protocol data description module includes: description information of name, command code, message type, request data type and response data type of each ASN.1 protocol item.

It can be seen from the above technical scheme that the ASN.1 protocol processor of the present invention reduces the difficulty and working load in application development. When the protocol design is changed, only the modification of the description file in the protocol procedure is needed while the software codes remain unchanged. So the coming maintenance of the system becomes easier. Meanwhile, the scale of the application system is reduced.

### Brief Description of the Drawings

Figure 1 shows a schematic diagram of the ASN.1 protocol processor in the prior art.
Figure 2 shows a schematic diagram of the ASN.1 protocol processor according to a preferred embodiment of the present invention.
Figure 3 shows a schematic diagram of the structure of the protocol data description module according to the embodiment shown in Figure 2.

### Detailed Description of the Embodiments

An embodiment of the present invention will hereinafter be described in detail with reference to the drawings so that the technical scheme and advantages thereof can be more apparent.

According to the ASN.1 protocol processor of this embodiment the programming code of the protocol processing is integrated into a protocol procedure module, at the same time, the data module, which changes most frequently during the protocol processing, is extracted from the processing procedure, and a protocol data description module is established for ASN.1 data in the format of XML description file to achieve automatic data sending and receiving of ASN.1 protocol.

In a preferred embodiment, the ASN.1 protocol interacting process is abstracted, and its software codes which are usually Java programming codes are integrated into the protocol procedure module including two procedures: a simple query procedure and a data subscription (sometimes referred to as real-time data service) procedure. Furthermore, the ASN.1 data encoding and decoding are also integrated into an encoder/decoder module, which is to be invoked by the above protocol procedure module so that the encoding and decoding rules can be substituted and reused easily. The integration of the protocol processing makes the processing remain unchanged when the specific protocol changes.

Meanwhile, the ASN.1 protocol data, sever information and information on determining which of the procedures is to be used are described by XML to establish a protocol data description module, wherein the protocol data description module includes all the description information of the name, command code, message type, request data type and response data type of each ASN.1 protocol item. Since the data contents in the protocol data description module are set when the system starts, when the specific protocol changes, it is only necessary to set or modify the data contents of the protocol data description module at the start-up of the system while there is no need to change the procedure.

The ASN.1 protocol processor in an embodiment is shown in Figure 2. As shown in Figure 2, the ASN.1 protocol processor 200 includes a protocol data description module 201 in which the ASN.1 protocol is integrated and a protocol procedure module 202 in which the protocol procedure codes are integrated.

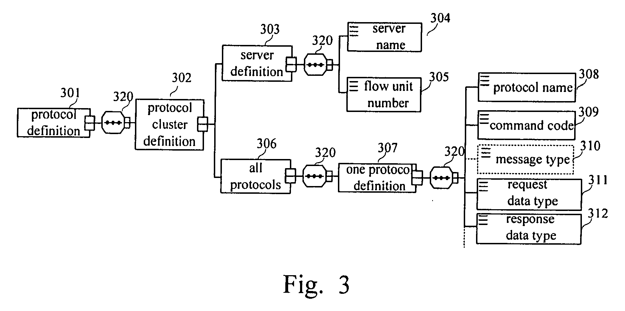

The structure of the protocol data description module 201 according to the embodiment is shown in Figure 3. The protocol definition 301 of the protocol data description module 201 includes a plurality of protocol cluster definitions 302. The protocol cluster definition 302 includes a server definition 303 and all protocol definitions 306. The server definition 303 includes a server name 304 and a procedure unit number 305. One protocol definition 307 in the all protocol definitions 306 includes such information as protocol name 308 that uniquely identifies the protocol, command code 309, message type 310, request data type 311, and response data type 312. The message type 310 is a predefined message type that specifies the transmission mode of the protocol, which is usually not modified, while other definitions can be defined according to the specific protocol. The data contents of the data description module are set at the start-up of the system. The block 320 in Figure 3 represents more than one definition thereafter, i.e. there may be a plurality of definitions after 320.

The protocol procedure module 202 includes a protocol procedure layer 203 in which the protocol interacting process is integrated, a connection layer 204 and an encoder/decoder layer 205 in which the encoding and decoding process is integrated.

The protocol procedure layer 203 receives the ASN.1 request from the client, then obtains the corresponding ASN.1 protocol description information from the protocol data description module 201 and sends it to the encoder/decoder layer 205; the encoder/decoder layer 205 encodes the ASN.1 request into the byte stream data that can be accepted by the server based on the protocol data description information, and returns the byte stream data to the protocol procedure layer 203; and then the procedure layer 203 sends the byte stream data to the server through the connection layer 204.

Alternatively, the protocol procedure layer 203 receives the byte stream data from the server through the connection layer 204 and sends them to the encoder/decoder layer 205; the encoder/decoder layer 205 decodes the byte stream data into the ASN.1 protocol data and returns them to the protocol procedure layer 203; and then the protocol procedure layer 203 returns the ASN.1 protocol data to the client.

Furthermore, the protocol procedure layer 203 may also include a simple query procedure unit in which the data query process is integrated and a data subscription procedure unit (not shown in Figure 2) in which the data subscribing process is integrated.

The simple query procedure unit is used to control the client to send one query request to the server and receive the inquired data returned by the server when the client inquires data in the server. The data query procedure features one request and one response. Typically, this procedure is used to inquire the information of a certain user, to inquire a bill, and etc.

The data subscription procedure unit is used to control the client to send one subscription request to the server and to receive all the subscribed data for a plurality of times from the server when the client has subscribed to data from the server. The data subscription procedure is: the client initiates a request to register itself on the server, and then the server returns the subscribed data directly to the registered client. This interaction procedure features one request and multiple responses, and is typically used for real-time warning, i.e., once receiving a warning, the server will send the warning message to all registered clients.

The connection layer 204 includes a connection pool unit 207 and a connection pool manager 206. The protocol procedure layer 203 communicates with the connection pool manager 206, which controls the connection pool unit 207 to create connection between the client and the server. The created connection will be maintained after one protocol interaction is completed, and the maintained connection can be directly used to implement communications when next protocol interaction is needed.

It can be seen from the above embodiment that the ASN.1 protocol processor of the invention reduces difficulty and working load in the software development. When the protocol design is changed, only the data description module needs to be updated, and the software codes keep unchanged. So the maintenance of the system becomes easier. Meanwhile, the scale of the application system is reduced. Furthermore, since the details for implementing the protocol interaction is shielded, the requirement for knowledge and skills of the application developer is lowered and the training cost is consequently reduced.

## Claims

1. An ASN.1 protocol processor for protocol interacting between the server and client and transformation between protocol data and byte stream data, comprising: a protocol data description module in which an ASN.1 protocol is integrated and a protocol procedure module in which protocol procedure codes are integrated;
wherein the protocol data description module stores ASN.1 protocol description information which is described by the extensible Markup Language (XML), and stores the ASN.1 protocol data which are required by the protocol procedure and set according to the description information before the protocol interacting; and
the protocol procedure module obtains the corresponding ASN.1 protocol description information from the protocol data description module according to an ASN.1 request from the client; encodes the ASN.1 request from the client into the byte stream data that can be accepted by the server based on the description information and sends the data to the server; or the protocol procedure module decodes the byte stream data received from the server into the ASN.1 protocol data and returns the data to the client.

2. The ASN.1 protocol processor according to Claim 1, wherein the protocol procedure module includes a protocol procedure layer in which the protocol interacting process is integrated, an encoder/decoder layer in which the encoding and decoding processes are integrated, and a connection layer;
the protocol procedure layer receives the ASN.1 request initiated by the client, obtains the corresponding ASN.1 protocol description information from the protocol data description module and sends the information to the encoder/decoder layer; the encoder/decoder layer encodes the ASN.1 request from the client to the byte stream data that can be accepted by the server based on the description information, and returns the byte stream data to the protocol procedure layer; and the protocol procedure layer sends the byte stream data to the server through the connection layer;
alternatively, the protocol procedure layer receives byte stream data from the connection layer and sends the data to the encoder/decoder layer; the encoder/decoder layer decodes the byte stream data into ASN.1 protocol data and returns the data to the protocol procedure layer; and the protocol procedure layer returns the ASN.1 protocol data to the client;
the connection layer is controlled by the protocol procedure layer to establish connection between the client and the server, the established connection is maintained after one protocol interaction is performed so that the same connection could be used for next interactions.

3. The ASN.1 protocol processor according to Claim 2, wherein the protocol procedure layer includes a simple query procedure unit in which a data query procedure is integrated, and a data subscription procedure unit in which a data subscription procedure is integrated; the protocol data description module further includes information of the server and the description information for determining which of the above the procedure units is to be entered;
the simple query procedure unit is used to control the client to send one query request to the server and to receive the inquired data from the server once when the client makes query of the data in the server;
the data subscription procedure unit is used to control the client to send one subscription request to the server and to receive for a plurality of times all the subscribed data returned from the server when the client has subscribed to the data in the server.

4. The ASN.1 protocol processor according to Claim 2, wherein the connection layer includes a connection pool unit and a connection pool manager; the connection pool manager controls the connection pool unit to establish connection between the client and the server.

5. The ASN.1 protocol processor according to Claim 1 or 3, wherein the protocol data description module includes the description information of the name, command code, message type, request data type and response data type of each ASN.1 protocol item.
